# EUROPÄISCHE PATENTSCHRIFT

(11) **EP 2 907 093 B1**
(45) Veröffentlichungstag und Bekanntmachung des Hinweises auf die Patenterteilung: **18.07.2018**
(21) Anmeldenummer: 13776969.1
(22) Anmeldetag: 11.10.2013
(51) Int. Cl.: G06Q 20/34, G06Q 20/36

(54) **LADEN UND AUSGEBEN EINES ELEKTRONISCHEN GELDBETRAGS**
LOADING AND DISBURSEMENT OF AN ELECTRONIC SUM OF MONEY
CHARGEMENT ET DÉPENSE D'UN MONTANT D'ARGENT ÉLECTRONIQUE

(30) Priorität: 15.10.2012 DE 102012020234
(43) Veröffentlichungstag der Anmeldung: 19.08.2015
(73) Patentinhaber: Giesecke+Devrient Mobile Security GmbH, 81677 München (DE)
(72) Erfinder: MEISTER, Gisela, 81737 München (DE); EICHHOLZ, Jan, 80997 München (DE)
(86) Internationale Anmeldenummer: PCT/EP2013/003091
(87) Internationale Veröffentlichungsnummer: WO 2014/060090

(56) Entgegenhaltungen:
- EP-A1- 1 887 458
- US-A1- 2008 230 601

## Beschreibung

Die Erfindung betrifft ein Verfahren zum Laden eines elektronischen Geldbetrags, der durch eine Zufallszahlenfolge dargestellt ist, in einen tragbaren Datenträger, und ein Verfahren zum Ausgeben eines Geldbetrags aus dem Datenträger.

Zum Laden eines elektronischen Geldbetrags auf ein Guthabenkonto für Mobiltelefonie sind Prepaidkarten bekannt. Nach Bezahlung des Geldbetrags an den Händler wird dem Käufer die Prepaidkarte ausgehändigt. Der Käufer legt einen auf der Prepaidkarte verdeckt angebrachten Guthabencode frei und übermittelt den Guthabencode unter Angabe seiner Mobiltelefonnummer an seinen Mobiltunk-Netzbetreiber. Der Netzbetreiber lädt das Guthabenkonto zur Mobiltelefonnummer um den Geldbetrag auf.

Zur Zahlung von Kleinbeträgen sind elektronische Geldbörsen (eWallet, electronic purse) bekannt. Es gibt in Chipkarten implementierte elektronische Geldbörsen wie z.B. die deutsche Geldkarte. Weiter sind elektronische Geldbörsen bekannt, die als Applikationen in mobilen Endgeräten wie z.B. Mobiltelefonen, Smartphones, PDAs und dergleichen implementiert sind.

Eine typische elektronische Geldbörse, z.B. die deutsche Geldkarte, hat einen dualen Aufbau, mit einem lokalen Börsenkonto in einem tragbaren Datenträger, z.B. in einer Chipkarte oder in einem Chip im mobilen Endgerät, und einem Schattenkonto bei einem Hintergrundserver. Zum Aufbuchen eines Geldbetrags auf die Geldbörse wird eine Zahlung an den Hintergrundserver geleistet, z.B. in bar oder mit einer Zahlungsverkehrkarte. In Reaktion auf die Zahlung werden das Schattenkonto und das Börsenkonto um den eingezahlten Betrag aufgebucht. Bei Bezahlung eines Geldbetrags mit der Geldbörse wird der Geldbetrag zunächst vom Börsenkonto abgebucht und anschließend, evtl. auch erst viel später, das Schattenkonto nachgeführt, der Geldbetrag also auch vom Schattenkonto abgebucht.

Zur Bezahlung (vor allem) kleiner elektronischer Geldbeträge gibt es eine Mehrzahl von Micropayment-Systemen.

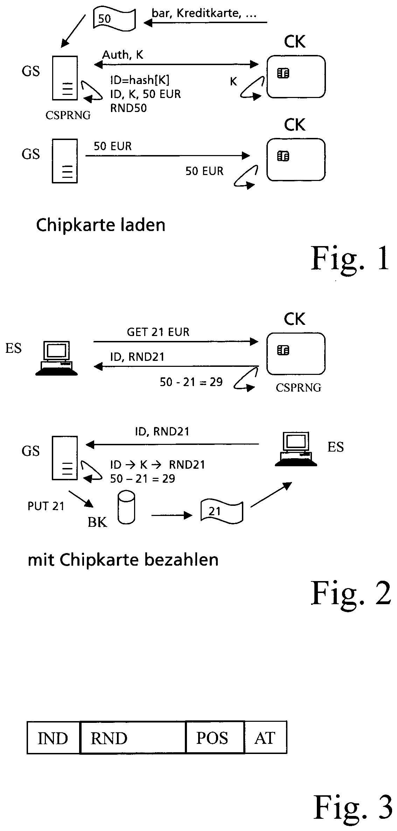

Beim Bitmint genannten Konzept für ein Micropayment-System erhält ein Kunde gegen Bezahlung eines Geldbetrags eine dem Geldbetrag entsprechende Zeichenfolge (Bitstring). Ein Geldbetrag von x Cent ist in Bitmint dargestellt durch eine x*N Byte lange Zufallszahl, mit z.B. N=32 Byte. Fig. 3 zeigt schematisch eine Implementierungsmöglichkeit für eine typische Bitmint Zeichenfolge. Bei der in Fig. 3 vorgeschlagenen Implementierungsmöglichkeit wird der Geldbetrag als Zufallszahlenfolge dargestellt. Die kleinste verfügbare Einheit 1 Cent ist dargestellt durch eine N (z.B. 32) Byte lange Zufallszahl. Ein Geldbetrag von x Cent ist durch eine Zufallszahlenfolge RND dargestellt, die aus einer Konkatenation der x aneinandergereihten N Byte lange Zufallszahlen RND0, RND1, ...RNDx der x einzelnen Cent besteht. Neben der Zufallszahlenfolge RND, die den Geldbetrag darstellt, umfasst die Zeichenfolge ein Positionsfeld POS, in dem Startposition POSS und Länge POSL der Zufallszahl RND angegeben sind. Mittels des Positionsfelds POS lässt sich die Zufallszahl teilen, um den Gesamtbetrag in Teilbeträge zu teilen, um beispielsweise Wechselgeld herauszugeben. Der Gesamtbetrag wird durch Startposition POSS am Beginn der Zufallszahlenfolge RND und Länge POSL Gesamtlänge der Zufallszahlenfolge angegeben. Durch ausgewählte Werte von Position POSS und Länge POSL werden Teilbeträge dargestellt. Optional umfasst die Zeichenfolge einen Index IN, der die Verwaltung erleichtert, und ein Attributefeld AT.

Es wäre wünschenswert, elektronisches Bitmit Geld in einer elektronischen Geldbörse mitnehmen zu können. Um bei Bitmint einen größeren Geldbetrag zu speichern, muss eine Vielzahl von langen Zufallszahlen gespeichert werden. Hierfür reicht der typische verfügbare Speicherplatz einer Chipkarte oder einer Geldbörsen-Applikation in einem mobilen Endgerät nicht aus.

Das Dokument EP 1 887 458 A1 aus dem Stand der Technik offenbart ein Verfahren zum Erzeugen von Pseudozufallszahlen mit einem Pseudozufallszahlengenerator, der in einem Datenträger eingerichtet ist, auf Basis eines Geheimschlüssels, gemäß dem Oberbegriff von Anspruch 1. Das Dokument US 2008/230601 A1 aus dem Stand der Technik offenbart ein Verfahren zum Laden eines elektronischen Geldbetrags in einen tragbaren Datenträger ausgehend von einem Server.

Der Erfindung liegt die Aufgabe zu Grunde, ein sicheres und effizientes Verfahren zum Laden eines elektronischen Geldbetrags, der durch eine Zufallszahlenfolge dargestellt ist, in einen tragbaren Datenträger anzugeben. Weiter soll ein Verfahren zum Bezahlen mit dem Datenträger angegeben werden, indem der Geldbetrag oder ein Teilbetrag davon wieder aus dem Datenträger ausgegeben wird.

Die Aufgabe wird gelöst durch ein Verfahren zum Laden eines Geldbetrags nach Anspruch 1 und ein Verfahren zum Ausgeben zumindest eines Teilbetrags des Geldbetrags nach Anspruch 1. Vorteilhafte Ausgestaltungen der Erfindung sind in den abhängigen Ansprüchen angegeben.

Das Verfahren nach Anspruch 1 ist dazu eingerichtet, einen elektronischen Geldbetrag, der durch eine Zufallszahlenfolge dargestellt ist, in einen tragbaren Datenträger zu laden. Das Verfahren umfasst dabei, dass
- die Zufallszahlenfolge durch einen, insbesondere kryptographisch sicheren, Pseudo-Zufallszahlengenerator von einem Hintergrundsystem erzeugt worden ist, wobei die Zufallszahlenfolge (d.h. die einzelnen Zufallszahlen) auf Basis zumindest eines Geheimschlüssels erzeugt worden ist,
- in dem Datenträger ein, insbesondere kryptographisch sicherer, Pseudo-Zufallszahlengenerator implementiert ist, mit dem auf Basis zumindest des Geheimschlüssels Zufallszahlen erzeugbar sind.

Der Geldbetrag ist erfindungsgemäß durch eine vorbestimmte Anzahl von Geldeinheiten gebildet. Die Zufallszahlenfolge ist durch eine Aneinanderreihung derselben Anzahl von Zufallszahlen gebildet wie der Geldbetrag Geldeinheiten hat. Gemäß der Erfindung wird weiter der Geldbetrag in den tragbaren Datenträger geladen, indem die Anzahl von Geldeinheiten und der Geheimschlüssel derart in den tragbaren Datenträger gespeichert werden, dass mittels des im Datenträger implementierten Pseudo-Zufallszahlengenerators und unter Verwendung der gespeicherten Geldeinheiten und des gespeicherten Geheimschlüssels die Zufallszahlenfolge erzeugbar und aus dem Datenträger ausgebbar ist. Der Geheimschlüssel ist für den Datenträger individuell. Hierdurch ist anhand der Zufallszahlenfolge der zur Zufallszahlenfolge gehörige Datenträger eindeutig festgelegt. Weiter ist dem Datenträger ein eindeutiger Identifikator zugeordnet, wobei die Zufallszahlen der Zufallszahlenfolge auf Basis zumindest des Geheimschlüssels und des eindeutigen Identifikators des Datenträgers erzeugt worden sind bzw. werden. Als Identifikator kann beispielsweise ein Hashwert über eine für den Datenträger spezifische Information vorgesehen sein. Als spezifische Information kann insbesondere der individuelle Geheimschlüssel des Datenträgers vorgesehen sein, so dass also als Identifikator der Hashwert über den individuellen Geheimschlüssel des Datenträgers verwendet wird. Aus Sicherheitsgründen sollte der Geheimschlüssel nicht im Klartext übertragen werden, z.B. an ein Hintergrundsystem. Prinzipiell geeignet als Identifikator wäre der Geheimschlüssel auch. In Kombination mit dem für den Datenträger individuellen Geheimschlüssel und dem Identifikator wird zudem erreicht, dass ein abzubuchender Geldbetrag ausschließlich vom richtigen, zum Datenträger gehörigen Schattenkonto abgebucht werden kann. Die Schattenkonten anderer Datenträger können mit dem Geldbetrag nicht beeinflusst werden, da anderen Datenträgern andere Geheimschlüssel zugewiesen sind.
Der Geldbetrag ist außerhalb des Datenträgers als eine mit einem Geheimschlüssel erzeugte Zufallszahlenfolge dargestellt, beispielsweise in Bitmint-Währung. Auf einem Server ist die Speicherung der speicherintensiven Zufallszahlenfolge leicht möglich, da der Server eine hohe Speicherkapazität hat. Beim Speichern des Geldbetrags in den Datenträger werden lediglich die Geldeinheiten gespeichert. Eine Geldeinheit benötigt dabei nur ein einziges Bit Speicherplatz. Die Zufallszahl würde dagegen so viel Speicherplatz benötigen, wie sie lang ist, beispielsweise 32 Byte. Somit lässt sich durch die erfindungsgemäße Speicherung ein Geldbetrag, der als Zufallszahlenfolge dargestellt ist, speicherplatzsparend abspeichern. Mit dem im Datenträger implementierten Pseudo-Zufallszahlengenerator und Geheimschlüssel lässt sich andererseits die Zufallszahlenfolge zum geladenen Geldbetrag erneut erzeugen. Somit ist der Geldbetrag wieder in der ursprünglichen Währung als Zufallszahlenfolge aus dem Datenträger ausgebbar. Die Zufallszahlenfolge ist also nicht geschluckt und irreversibel vernichtet, sondern tatsächlich wiederherstellbar gespeichert.

Ein erfindungsgemäßes Verfahren zum Ausgeben zumindest eines Teilbetrags eines Geldbetrags aus einem tragbaren Datenträger, in den der Geldbetrag mit dem oben angegebenen Verfahren geladen worden ist, zeichnet sich dadurch aus, dass mittels des im Datenträger implementierten Pseudo-Zufallszahlengenerators und unter Verwendung der gespeicherten Geldeinheiten und des gespeicherten Geheimschlüssels die Zufallszahlenfolge erzeugt wird und aus dem Datenträger ausgegeben wird und die dem Teilbetrag entsprechende Anzahl von Geldeinheiten im Datenträger gelöscht wird.

Somit ist mit dem Verfahren der Teilbetrag wieder in der ursprünglichen Form als Zufallszahlenfolge außerhalb des Datenträgers vorhanden und kann zum Bezahlen verwendet werden. Im Datenträger ist der Teilbetrag entfernt.

Als zumindest Teilbetrag kann der gesamte Geldbetrag oder ein Teil davon vorgesehen sein.

Als Datenträger ist wahlweise vorgesehen: eine Chipkarte, ein Mikroprozessor-Token in anderer Form als Chipkarten-Form, ein mobiles Endgerät, insbesondere Mobiltelefon, Smartphone, PDA.

Wahlweise ist der Datenträger als elektronische Geldbörse gestaltet. Dabei ist in dem Datenträger ein Börsenkonto eingerichtet. Zudem ist in einem Guthabenserver eines Hintergrundsystems ein dem Börsenkonto zugeordnetes Schattenkonto eingerichtet. Bei dem Verfahren wird zusätzlich der Geldbetrag auf das Schattenkonto geladen, indem die Zufallszahlenfolge beim Guthabenserver gespeichert wird.

Wahlweise ist oder wird der Geheimschlüssel des Datenträgers beim Hintergrundsystem, insbesondere Guthabenserver, gespeichert. Falls ein Identifikator vorgesehen ist, ist oder wird dieser optional ebenfalls beim Hintergrundsystem, insbesondere Guthabenserver, gespeichert.

Vorzugsweise, wenn durch das Hintergrundsystem eine Mehrzahl von Geldbörsen verwaltet wird, hat jede Geldbörse einen individuellen Geheimschlüssel und ggf. individuellen Identifikator. Somit besteht eine eindeutige Zuordnung zwischen Geldeinheiten, die als Zufallszahlenfolgen dargestellt sind, und Datenträgern.

Wahlweise wird der aus dem Datenträger erfindungsgemäß ausgegebene Teilbetrag an das Hintergrundsystem geleitet, wobei beim Guthabenserver der Teilbetrag vom Schattenkonto abgebucht wird. Insbesondere wird der Teilbetrag beim Schattenkonto abgebucht, indem die Zufallszahlenfolge im Schattenkonto gelöscht oder als verbraucht markiert wird.

Wahlweise wird mit dem ausgegebenen Teilbetrag der Geheimschlüssel oder/und ggf. der Identifikator mit ausgegeben und an das Hintergrundsystem geleitet. Wahlweise wird beim Hintergrundsystem anhand des Geheimschlüssels oder/und anhand des Identifikators das zum Datenträger gehörige Schattenkonto ausgewählt.

Folglich ist das erfindungsgemäße Laden und wieder Ausgeben von Geldbeträgen gerade für elektronische Geldbörsen vorteilhaft, die ein lokales Börsenkonto und ein parallel dazu geführtes Schattenkonto in einem Hintergrundsystem haben, beispielsweise für ein Laden und wieder Ausgeben von Geld in bzw. aus eine/r Geldkarte. Für solche Geldbörsen bietet das erfindungsgemäße Verfahren eine erhöhte Sicherheit.

Die elektronische Geldbörse kann wahlweise z.B. implementiert sein: in einer Chipkarte, z.B. als Geldkarte; oder in einem Token; oder in einem mobilen Endgerät.

Wahlweise wird der Geheimschlüssel durch das Hintergrundsystem festgelegt und bei Bedarf durch das Hintergrundsystem in den Datenträger gespeichert.

Wahlweise wird der Geheimschlüssel durch Schlüsselvereinbarung zwischen dem Hintergrundsystem und dem Datenträger festgelegt und im Rahmen der Schlüsselvereinbarung sowohl im Datenträger als auch im Hintergrundsystem abgespeichert, so dass er im Hintergrundsystem und im Datenträger verfügbar ist. Die Schlüsselvereinbarung kann wahlweise durch ein Authentisierungsverfahren mit Schlüsselvereinbarung durchgeführt werden. Wahlweise wird die Schlüsselvereinbarung mittels eines der folgenden Verfahren durchgeführt: EAC nach EN 14890; OPACITY GICS; GP. Die Verfahren sind an sich bekannte Verfahren zur Schlüsselvereinbarung, ggf. mit Authentisierung. Wahlweise wird als Geheimschlüssel ein Sitzungsschlüssel gemäß einem Schlüsselvereinbarungsprotokoll festgelegt, also ein nur für eine "Sitzung" gültiger, d.h. für einmal Geldladen und Geldausgeben gültiger Schlüssel.

Ein erfindungsgemäßes Zahlungsverkehr-System umfasst einen Datenträger und ein Hintergrundsystem wie obenstehend beschrieben. In dem Datenträger ist ein Geheimschlüssels gespeichert und ein, insbesondere kryptographisch sicherer, Pseudo-Zufallszahlengenerator implementiert, mit dem auf Basis zumindest des Geheimschlüssels Zufallszahlen erzeugbar sind, mit dem obenstehend beschriebenen Verfahren.

Im Folgenden wird die Erfindung an Hand von Ausführungsbeispielen und unter Bezugnahme auf die Zeichnung näher erläutert, in der zeigen:
- Fig. 1: ein erfindungsgemäßes Laden eines Geldbetrags in einen Datenträger;
- Fig. 2: eine erfindungsgemäßes Ausgeben von Geldeinheiten aus dem Datenträger aus Fig. 1;
- Fig. 3: eine Implementierungsmöglichkeit eines Bitmint Geldbetrags.

Fig. 1 zeigt ein Laden eines Geldbetrags, der in Bitmint Währung dargestellt ist, in eine als Chipkarte CK gestaltete elektronische Geldbörse, gemäß einer Ausführungsform der Erfindung. In der Chipkarte CK ist ein Börsenkonto eingerichtet. Auf einem Guthabenserver GS bei einem Hintergrundsystem ist ein dem Börsenkonto zugeordnetes Schattenkonto eingerichtet. Im Hintergrundsystem und in der Chipkarte ist jeweils ein Pseudo-Zufallszahlengenerator CSPRNG implementiert. Auf dem Schattenkonto und auf dem Börsenkonto ist jeweils ein Gesamtguthaben in gleicher Höhe angelegt. Um einen Ladebetrag von 50 Euro auf die elektronische Geldbörse zu laden, werden in bar, per Kreditkarte oder sonstwie 50 Euro an den Guthabenserver GS vorausbezahlt. Dabei wird die zu ladende elektronische Geldbörse bzw. Chipkarte CK bezeichnet. Anlässlich der Vorausbezahlung wird die Vereinbarung eines Sitzungsschlüssels K zwischen der Chipkarte CK und dem Guthabenserver GS veranlasst und durchgeführt. Der Sitzungsschlüssel K wird in der Chipkarte CK und im Hintergrundsystem hinterlegt. Der Guthabenserver GS bildet zudem einen Identifikator ID aus dem Hashwert hash[K] über den Sitzungsschlüssel K und speichert ihn ab. Mit dem Pseudo-Zufallszahlengenerator CSPRNG und dem Sitzungsschlüssel K erzeugt das Hintergrundsystem aus dem Ladebetrag 50 Euro eine Zufallszahlenfolge RND50 und speichert sie ab. Hierdurch wird ein um 50 Euro erhöhtes neues Gesamtguthaben auf dem Schattenkonto erzeugt. Zudem sendet das Hintergrundsystem den Ladebetrag 50 Euro an die Chipkarte, deren Guthaben um 50 Euro erhöht wird. In Fig. 1 ist das Gesamtguthaben gleich dem Ladebetrag gleich 50 Euro, d.h. die Chipkarte CK war zuvor leer. Alternativ kann die Chipkarte CK vor dem Laden ein altes Gesamtguthaben und nach dem Laden ein um den Ladebetrag erhöhtes Gesamtguthaben haben.

Fig. 2 zeigt ein Ausgeben von Geldeinheiten aus der Chipkarte CK aus Fig. 1, gemäß einer Ausführungsform der Erfindung. Der Inhaber des Guthabenkontos aus Fig. 1 möchte von seinem PC aus im Internet beim Onlineshop des Empfängers Waren im Wert von 21 Euro bestellen und mittels Geldbörsen-Chipkarte CK bezahlen. Hierzu betreibt er die Chipkarte CK im Kartenleser des PC. Er gibt am PC als Zahlungsmittel Geldbörse an, klickt am PC "Bestellung absenden" und sendet hierdurch eine Bestellbestätigung an den Empfänger. Der Empfänger betreibt einen Empfängerserver ES, der zur Kommunikation mit elektronischen Geldbörsen eingerichtet ist und erkennt die Zahlungsweise Geldbörse. In Reaktion sendet der Empfängerserver ES an den Inhaber eine Zahlungsaufforderung über 21 Euro, umfassend einen an die Geldbörse /Chipkarte CK gerichteten Befehl "GET 21 EUR". Die Chipkarte CK wertet den Befehl GET 21 EUR aus. Daraufhin erzeugt der in der Chipkarte implementierte Pseudo-Zufallszahlengenerator CSPRNG eine dem zu zahlenden Betrag 21 Euro entsprechende Zufallszahlenfolge RND21, löscht die 21 Euro bei sich selbst, und sendet die Zufallszahlenfolge RND21 und den Identifikator ID an den Empfängerserver ES. Intern in der Chipkarte CK wird das Gesamtguthaben dabei also von 50 Euro um 21 Euro auf 29 Euro verringert. Der Empfängerserver ES sendet die Zufallszahlenfolge RND21 und den Identifikator ID an den Guthabenserver GS der Chipkarte CK. Der Guthabenserver verwaltet eine Vielzahl von Chipkarten wie die Chipkarte CK. Der Guthabenserver GS sucht anhand des Identifikators ID die richtige Chipkarte CK und den richtigen Sitzungsschlüssel K heraus. Danach gibt der Guthabenserver GS mit dem Sitzungsschlüssel K beim Schattenkonto, das dem Identifikator ID zugeordnet ist, den Zahlbetrag in Höhe von 21 Euro frei, indem er eine Zufallszahlenfolge RND21 entwertet, die 21 Euro entspricht. Schließlich veranlasst der Guthabenserver GS auf an sich bekannte Weise die Zahlung von 21 Euro an den Empfänger (symbolisches Kommando "PUT 21"), z.B. an einen Bankserver BK, der ein Konto des Empfängers verwaltet.

Fig. 3 zeigt den Aufbau eines Geldbetrags in Bitmint Währung. Ein Indikator IND bezeichnet z.B. ein individuelles Geldbörsenkonto. Ein Attributefeld AT bietet die Möglichkeit, Zusatzinformationen wie z.B. Zweckbindung eines Geldbetrags anzugeben. Die Zufallszahlenfolge RND und das Positionsfeld POS bilden den eigentlichen Geldbetrag. Die Zufallszahlenfolge RND besteht aus einer Konkatenation (Aneinanderreihung) von i Zufallszahlen RNDi. Die Anzahl i der Zufallszahlen ist gleich der Anzahl i Geldeinheiten im dargestellten Geldbetrag. Durch Angabe einer Startposition größer Null und einer Länge kleiner i im Positionsfeld lassen sich Teilbeträge des Geldbetrags angeben.

## Patentansprüche

1. Verfahren zum Laden und Ausgeben eines elektronischen Geldbetrags, der durch eine Zufallszahlenfolge (RND) dargestellt ist, in einen tragbaren Datenträger (CK), wobei der Geldbetrag durch eine vorbestimmte Anzahl von Geldeinheiten gebildet ist und die Zufallszahlenfolge (RND) durch eine Aneinanderreihung derselben Anzahl von Zufallszahlen gebildet ist, wobei
- die Zufallszahlenfolge (RND) durch einen Pseudo-Zufallszahlengenerator (CSPRNG) von einem Hintergrundsystem erzeugt worden ist, wobei die Zufallszahlenfolge (RND) auf Basis zumindest eines Geheimschlüssels (K) erzeugt worden ist,
- in dem Datenträger ein Pseudo-Zufallszahlengenerator (CSPRNG) implementiert ist, mit dem auf Basis zumindest des Geheimschlüssels (K) Zufallszahlen erzeugbar sind,
- der Geheimschlüssel (K) für den Datenträger (CK) individuell ist,
- dem Datenträger ein eindeutiger Identifikator zugeordnet ist, und wobei die Zufallszahlen der Zufallszahlenfolge (RND) auf Basis zumindest des Geheimschlüssels (K) und des eindeutigen Identifikators (ID) des Datenträgers (CK) erzeugt worden sind bzw. werden,
und
- der Geldbetrag in den tragbaren Datenträger (CK) geladen wird, indem die Anzahl von Geldeinheiten und der Geheimschlüssel (K) derart in den tragbaren Datenträger (CK) gespeichert werden, dass mittels des im Datenträger (CK) implementierten Pseudo-Zufallszahlengenerators (CSPRNG) und unter Verwendung der gespeicherten Geldeinheiten und des gespeicherten Geheimschlüssels (K) die Zufallszahlenfolge (RND) erzeugbar und aus dem Datenträger (CK) ausgebbar ist,
- und zumindest ein Teilbetrag des Geldbetrags aus dem tragbaren Datenträger (CK) ausgegeben wird, indem mittels des im Datenträger (CK) implementierten Pseudo-Zufallszahlengenerators (CSPRNG) und unter Verwendung der gespeicherten Geldeinheiten und des gespeicherten Geheimschlüssels (K) die Zufallszahlenfolge (RND) erzeugt wird und aus dem Datenträger (CK) ausgegeben wird und die dem Teilbetrag entsprechende Anzahl von Geldeinheiten im Datenträger (CK) gelöscht wird.

2. Verfahren Anspruch 1, wobei der Datenträger (CK) als elektronische Geldbörse gestaltet ist, wobei in dem Datenträger ein Börsenkonto eingerichtet ist und in einem Guthabenserver (GS) eines Hintergrundsystems ein dem Börsenkonto zugeordnetes Schattenkonto eingerichtet ist, und wobei bei dem Verfahren zusätzlich der Geldbetrag auf das Schattenkonto geladen wird, indem die Zufallszahlenfolge (RND) beim Guthabenserver (GS) gespeichert wird.

3. Verfahren nach Anspruch 2, wobei der Geheimschlüssel (K) des Datenträgers (CK) beim Hintergrundsystem, insbesondere Guthabenserver (GS), gespeichert ist oder wird.

4. Verfahren nach Anspruch 3, wobei der aus dem Datenträger ausgegebene Teilbetrag an das Hintergrundsystem geleitet wird, und wobei beim Guthabenserver (GS) der Teilbetrag vom Schattenkonto abgebucht wird, insbesondere indem die Zufallszahlenfolge (RND) im Schattenkonto gelöscht oder als verbraucht markiert wird.

5. Verfahren nach einem der Ansprüche 2 bis 4, wobei der Geheimschlüssel (K) durch das Hintergrundsystem festgelegt wird.

6. Verfahren nach einem der Ansprüche 2 bis 4, wobei der Geheimschlüssel (K) durch Schlüsselvereinbarung zwischen dem Hintergrundsystem und dem Datenträger (CK) festgelegt wird.

7. Verfahren nach Anspruch 6, wobei als Geheimschlüssel (K) ein Sitzungsschlüssel gemäß einem Schlüsselvereinbarungsprotokoll festgelegt wird.

8. Datenträger (CK), in dem ein Geheimschlüssels (K) gespeichert ist, und in dem ein Pseudo-Zufallszahlengenerator (CSPRNG) implementiert ist, mit dem auf Basis zumindest des Geheimschlüssels (K) Zufallszahlen erzeugbar sind, wobei der Datenträger (CK) zur Durchführung eines Verfahrens nach einem der Ansprüche 1 bis 7 eingerichtet ist, und der insbesondere zum Zusammenwirken mit einem Hintergrundsystem umfassend einen Guthabenserver (GS), der nach einem der Ansprüche 2 bis 6 eingerichtet ist.

## Claims

1. A method for loading and disbursing an electronic amount of money represented by a random number sequence (RND) to a portable data carrier (CK), wherein the amount of money is formed by a predetermined number of money units and the random number sequence (RND) is formed by an array of the same number of random numbers, wherein
- the random number sequence (RND) has been generated by a pseudo random-number generator (CSPRNG) of a background system, wherein the random number sequence (RND) has been generated on the basis of at least one secret key (K),
- in the data carrier a pseudo random-number generator (CSPRNG) is implemented, with which random numbers can be generated on the basis of at least the secret key (K), and
- the secret key (K) is individual to the data carrier (CK),
- a unique identifier is allocated to the data carrier, and wherein the random numbers of the random number sequence (RND) have been or are generated on the basis of at least the secret key (K) and the unique identifier (ID) of the data carrier (CK),
and
- the amount of money is loaded to the portable data carrier (CK) by so storing the number of money units and the secret key (K) in the portable data carrier (CK) that by means of the pseudo random-number generator (CSPRNG) implemented in the data carrier (CK) and employing the stored money units and the stored secret key (K) the random number sequence (RND) can be generated and output from the data carrier (CK),
- and at least a partial amount of the amount of money is disbursed from the portable data carrier (CK) in that, by means of the pseudo random-number generator (CSPRNG) implemented in the data carrier (CK) and employing the stored money units and the stored secret key (K), the random number sequence (RND) is generated and output from the data carrier (CK) and the number of money units that corresponds to the partial amount is deleted in the data carrier (1).

2. The method according to claims 1, wherein the data carrier (CK) is arranged as an electronic wallet, wherein in the data carrier a wallet account is set up, and in a credit server (GS) of a background system a shadow account is set up that is allocated to the wallet account, and wherein in the method additionally the amount of money is loaded to the shadow account by storing the random number sequence (RND) in the credit server (GS).

3. The method according to claim 2, wherein the secret key (K) of the data carrier (CK) has been or is stored in the background system, in particular the credit server (GS).

4. The method according to claim 3, wherein the partial amount disbursed from the data carrier is passed to the background system, and wherein in the credit server (GS) the partial amount is debited from the shadow account, in particular by deleting or marking as used the random number sequence (RND) in the shadow account.

5. The method according to any of claims 2 to 4, wherein the secret key (K) is determined by the background system.

6. The method according to any of claims 2 to 4, wherein the secret key (K) is determined by key agreement between the background system and the data carrier (CK).

7. The method according to claim 6, wherein as the secret key (K) there is determined a session key according to a key agreement protocol.

8. A data carrier (CK), in which a secret key (K) is stored, and in which a pseudo random-number generator (CSPRNG) is implemented, with which random numbers can be generated on the basis of at least the secret key (K), wherein the data carrier (CK) is adapted to carry out a method according to any of claims 1 to 7, and which is in particular adapted to interact with a background system comprising a credit server (GS) adapted in accordance with any of claims 2 to 6.

## Revendications

1. Procédé de chargement et de délivrance d'une somme d'argent électronique représentée par une séquence de chiffres aléatoires (RND) dans un support de données (CK) portable, cependant que la somme d'argent est constituée par un nombre prédéterminé d'unités monétaires et que la séquence de chiffres aléatoires (RND) est constituée par une juxtaposition du même nombre de chiffres aléatoires, cependant que
- la séquence de chiffres aléatoires (RND) a été générée par un pseudo-générateur de chiffres aléatoires (CSPRNG) d'un système d'arrière-plan, cependant que la séquence de chiffres aléatoires (RND) a été générée sur la base d'au moins une clé secrète (K),
- dans le support de données, un pseudo-générateur de chiffres aléatoires (CSPRNG) est mis en oeuvre, avec lequel, sur la base d'au moins la clé secrète (K), des chiffres aléatoires peuvent être générés,
- la clé secrète (K) est, pour le support de données (CK), individuelle,
- au support de données, un identificateur univoque est affecté, et cependant que les chiffres aléatoires de la séquence de chiffres aléatoires (RND) ont été ou vont être générés sur la base au moins de la clé secrète (K) et de l'identificateur univoque (ID) du support de données (CK),
- la somme d'argent est chargée dans le support de données (CK) portable, ce qui a lieu en ce que le nombre d'unités monétaires et la clé secrète (K) sont mémorisés de telle façon dans le support de données (CK) portable que, au moyen du pseudo-générateur de chiffres aléatoires (CSPRNG) mis en oeuvre dans le support de données (CK) et en utilisant les unités monétaires mémorisées et la clé secrète (K) mémorisée, la séquence de chiffres aléatoires (RND) peut être générée et peut être délivrée en sortie depuis le support de données (CK),
- et au moins un montant partiel de la somme d'argent est délivré depuis le support de données (CK) portable, ce qui a lieu en ce que, au moyen du pseudo-générateur de chiffres aléatoires (CSPRNG) mis en oeuvre dans le support de données (CK) et en utilisant les unités monétaires mémorisées et la clé secrète (K) mémorisée, la séquence de chiffres aléatoires (RND) peut être générée et peut être délivrée en sortie depuis le support de données (CK) et le nombre d'unités monétaires correspondant au montant partiel est effacé dans le support de données (CK).

2. Procédé selon la revendication 1, cependant que le support de données (CK) est réalisé sous forme de porte-monnaie électronique, cependant que, dans le support de données, un compte de bourse est établi, et que, dans un serveur de crédit (GS) d'un système d'arrière-plan, un compte pool affecté au compte de bourse est établi, et cependant que, dans le procédé, en outre la somme d'argent est chargée sur le compte pool, ce qui a lieu en ce que la séquence de chiffres aléatoires (RND) est mémorisée dans le serveur de crédit (GS).

3. Procédé selon la revendication 2, cependant que la clé secrète (K) du support de données (CK) est ou va être mémorisée dans le système d'arrière-plan, en particulier dans le serveur de crédit (GS).

4. Procédé selon la revendication 3, cependant que le montant partiel délivré depuis le support de données est amené au système d'arrière-plan, et cependant que, au serveur de crédit (GS), le montant partiel est débité du compte pool, en particulier en ce que la séquence de chiffres aléatoires (RND) est, dans le compte pool, effacée ou marquée en tant qu'utilisée.

5. Procédé selon une des revendications de 2 à 4, cependant que la clé secrète (K) est fixée par le système d'arrière-plan.

6. Procédé selon une des revendications de 2 à 4, cependant que la clé secrète (K) est fixée par accord clé entre le système d'arrière-plan et le support de données (CK).

7. Procédé selon la revendication 6, cependant que, en tant que clé secrète (K), une clé de session selon un protocole d'accord clé est fixée.

8. Support de données (CK) dans lequel une clé secrète (K) est mémorisée et dans lequel un pseudo-générateur de chiffres aléatoires (CSPRNG) est mis en oeuvre, avec lequel, sur la base d'au moins la clé secrète (K), des chiffres aléatoires peuvent être générés, cependant que le support de données (CK) est configuré pour l'exécution d'un procédé selon une des revendications de 1 à 7, et qui est en particulier configuré pour co-agir avec un système d'arrière-plan comprenant un serveur de crédit (GS), selon une des revendications de 2 à 6.
